# EUROPEAN PATENT APPLICATION

(11) **EP 2 487 145 A1**
(43) Date of publication of application: **15.08.2012**
(21) Application number: 10822096.3
(22) Date of filing: 07.10.2010
(51) Int. Cl.: C04B 35/573, C04B 37/00, H01L 21/22

(54) **SILICON CARBIDE JOINED BODY AND METHOD FOR JOINING SILICON CARBIDE MEMBERS**

(30) Priority: 09.10.2009 JP 2009235684
(71) Applicant: Shin-Etsu Chemical Co., Ltd., Tokyo 100-0004 (JP)
(72) Inventor: AOKI, Yoshitaka, Annaka-shi Gunma 379-0224 (JP)
(74) Representative: Hallybone, Huw George
(86) International application number: PCT/JP2010/067663
(87) International publication number: WO 2011/043426

(57) **Abstract**

A high-purity silicon carbide conjugate having excellent heat resistance, and a method of producing such a conjugate. The silicon carbide conjugate is composed of a high-purity silicon carbide joining layer provided between a silicon carbide member and another silicon carbide member. The conjugate is obtained by interposing a curable silicone composition between the two silicon carbide members, curing the composition to obtained a cured product layer, and then thermally decomposing the cured product layer in a non-oxidizing atmosphere, thereby converting the layer to silicon carbide and joining the members together. The conjugate has excellent heat resistance and a high degree of purity.

## Description

### Technical Field

The present invention relates to a silicon carbide conjugate in which silicon carbide members are bonded together via a silicon carbide joining layer, and also relates to a method of producing such a conjugate.

### Background Art

Silicon carbide ceramics are chemically stable at both normal temperatures and high temperatures, and also exhibit excellent mechanical strength at high temperature, and they are therefore used as high-temperature materials. In recent years, in the field of semiconductor device production, high-purity silicon carbide ceramic sintered compacts having excellent heat resistance and creep resistance have started to be used as boards or process tubes or the like within steps for conducting heat treatments of semiconductor wafers, or conducting thermal diffusion of trace elements within semiconductor wafers.

Further, in recent years, because high-temperature annealing treatments of silicon carbide single crystal devices are performed at a temperature of 1,600°C to 1,700°C, the devices require considerable heat resistance.

However, a silicon carbide material having a specific shape is produced by molding and sintering a silicon carbide powder to form a sintered compact, but because silicon carbide is difficult to sinter, only simple shapes can be molded, and molding more complex shapes is problematic. Accordingly, two or more silicon carbide members having comparatively simple shapes are typically produced by sintering, and these members are then joined together to obtain a product having the desired shape.

Conventionally, known methods of joining silicon carbide members include a method in which an inorganic adhesive is used, and the members are joined together by pressure sintering using a hot press technique (Patent Document 1), and a method in which silicon is interposed between the joint surfaces of two silicon carbide members, and a heat treatment is then performed (Patent Document 2). However, the inorganic adhesive used in the method disclosed in Patent Document 1 can act as a source of free carbon and impurity elements derived from iron, which are considered detrimental in the field of semiconductor devices. The silicon that is used as an adhesive in the method disclosed in Patent Document 2 melts at a temperature of 1,600°C to 1,700°C, and therefore the joined members are unable to withstand the type of annealing treatment described above.

### Prior Art Documents

### Patent Documents

Patent Document 1: JP 2002-338334 A
Patent Document 2: JP 2001-163680 A

### Summery of the Invention

### Problems Invention Aims to Solve

Accordingly, an object of the present invention is to address the problems associated with the conventional technology described above, and provide a high-purity silicon carbide conjugate that does not generate impurity elements that are detrimental to semiconductors, and has sufficient heat resistance to withstand the type of high-temperature annealing treatment mentioned above, as well as providing a method of producing such a conjugate.

### Means for Solution of the Problems

As a result of intensive investigation aimed at addressing the problems described above, the inventors of the present invention discovered that the above object could be achieved by using silicon carbide as a joining layer, and forming the silicon carbide joining layer by inorganic ceramization of a curable silicone composition by thermal decomposition.

In other words, a first aspect of the present invention provides:
a silicon carbide conjugate, comprising a first silicon carbide member, a second silicon carbide member, and a silicon carbide joining layer interposed between the first and second silicon carbide members.

A second aspect of the present invention provides:
a method of producing the aforementioned silicon carbide conjugate, the method comprising:
   interposing a layer of a curable silicone composition between the first silicon carbide member and the second silicon carbide member,
   curing the layer of the curable silicone composition, and
   thermally decomposing the thus obtained cured product in a non-oxidizing atmosphere, thereby converting the cured product to silicon carbide and forming a silicon carbide joining layer that joins the first silicon carbide member and the second silicon carbide member.

### Affects of the Invention

In the silicon carbide conjugate of the present invention, the silicon carbide of the joint section is of high purity, and therefore even in the field of semiconductor devices, there is no danger of adverse effects caused by impurity elements, and because the silicon carbide of the joint section also exhibits superior heat resistance, the reliability of the conjugate is excellent.

According to the method of producing a silicon carbide conjugate according to the present invention, because the starting raw material is a silicone composition, a high degree of purity can be achieved at the silicone composition stage, and by simply curing and then thermally decomposing the silicone composition containing carbon-silicon bonds, the joint region can be formed as a high-purity silicon carbide, meaning a high-purity silicon carbide conjugate having superior heat resistance can be produced with comparative ease.

Accordingly, the present invention is particularly useful in the semiconductor field.

A more detailed description of the present invention is presented below. In this description, "room temperature" refers to the ambient temperature, which can typically change within a range from 10 to 35°C.

### Embodiments of Carrying Out the Invention

### - Silicon Carbide Conjugate -

In a silicon carbide conjugate of the present invention, the joining layer that forms the joint is composed of the same quality of silicon carbide as the silicon carbide members that are being joined, and because the joining layer is of high purity, it exhibits excellent mechanical strength even at high temperatures.

The silicon carbide members that constitute the silicon carbide conjugate are composed of silicon carbide sintered compacts, and the amount of impurity elements within the silicon carbide is preferably not more than 1 ppm, more preferably not more than 0.5 ppm, and still more preferably 0.1 ppm or less.

In the silicon carbide conjugate, the joining layer is also composed of a silicon carbide sintered compact, and the total amount of impurity elements contained within the silicon carbide is preferably not more than 1 ppm, more preferably not more than 0.5 ppm, and still more preferably 0.1 ppm or less.
Examples of the impurity elements contained within the silicon carbide members and the joining layer include, in particular, Fe, Cr, Ni, Al, Ti, Cu, Na, Zn, Ca, Zr, Mg and B, and any one or more of these impurity elements may be included. The total amount of all these impurity elements is preferably not more than the upper limit value mentioned above.

### - Method of Producing Silicon Carbide Conjugate -

The production method of the present invention includes the steps of:
(1): interposing a layer of a curable silicone composition between a first silicon carbide member and a second silicon carbide member,
(2): curing the layer of the curable silicone composition, and
(3): thermally decomposing the thus obtained cured product in a non-oxidizing atmosphere, thereby converting the cured product to silicon carbide and forming a silicon carbide joining layer that joins the first and second silicon carbide members.

### Step (1):

There are no particular limitations on the method used for interposing a layer of the curable silicone composition between the first silicon carbide member and the second silicon carbide member. For example, a liquid curable silicone composition may be applied to the surface of one of the silicon carbide members, and the other silicon carbide member then bonded to the resulting coating film. Alternatively, a sheet or film of the curable silicone composition may be sandwiched between the two silicon carbide members.

### Step (2):

The obtained layer of the curable silicone composition is cured, but the method and conditions used for the curing may be selected appropriately in accordance with the type of curable silicone composition used.

### Step (3):

The obtained cured product is thermally decomposed in a non-oxidizing atmosphere, thereby joining the two members and converting the cured product to silicon carbide.

### <Curable Silicone Composition>

The curable silicone composition used in the method of the present invention may contain a silicon carbide powder. This silicon carbide powder preferably has an average particle size, measured using a laser diffraction/scattering particle size and particle size distribution measurement device, of 0.1 µm to 100 µm, and more preferably 1 µm to 50 µm.
In this description, the "average particle size" refers to the median size, so that if the powder is split into two portions at a specified particle size, with the particles larger than the specified size in one portion and the particles smaller than the specified size in the other portion, then the median size is the particle size at which the mass of the two portions is the same. The silicon carbide powder may employ a commercially available high-purity silicon carbide powder. Further, the silicon carbide powder may also be obtained by heating a silicone powder, and in particular a cured product of a radiation-curable or organic peroxide-curable silicone composition, in a non-oxidizing atmosphere at a temperature within a range from 400 to 1,500°C, thereby converting the silicone powder to an inorganic ceramic composed essentially of carbon, silicon and oxygen, and then thermally decomposing the inorganic ceramic under the same atmosphere at a temperature exceeding 1,500°C but less than 2,200°C.
The amount of the silicon carbide powder within the composition is typically within a range from 5 to 90% by volume, and is preferably within a range from 10 to 80% by volume, and more preferably from 20 to 70% by volume.

Conventional compositions can be used as the curable silicone composition used in the above steps (1) and (2). Specific examples thereof include organic peroxide-curable, radiation-curable, addition-curable and condensation-curable organopolysiloxane compositions. Of these, organic peroxide-curable and radiation-curable silicone compositions are preferred in terms of obtaining a higher purity joining layer, and the total amount of the aforementioned impurity elements can be suppressed to not more than 1 ppm, preferably not more than 0.5 ppm, and more preferably 0.1 ppm or less.

Examples of organic peroxide-curable silicone compositions include silicone compositions that undergo curing via a radical polymerization, in the presence of an organic peroxide, of a linear organopolysiloxane having alkenyl groups such as vinyl groups at a molecular chain terminal (either at one terminal or at both terminals), or at non-terminal positions within the molecular chain, or at both of these positions.

Examples of radiation-curable silicone compositions include ultraviolet light-curable silicone compositions and electron beam-curable silicone compositions.

Examples of ultraviolet light-curable silicone compositions include silicone compositions that undergo curing as a result of the energy of ultraviolet light having a wavelength of 200 to 400 nm. In this case, there are no particular limitations on the curing mechanism. Specific examples of these compositions include acrylic silicone-based silicone compositions comprising an organopolysiloxane containing acrylic groups or methacrylic groups, and a photopolymerization initiator, mercapto-vinyl addition polymerization-based silicone compositions comprising a mercapto group-containing organopolysiloxane, an organopolysiloxane that contains alkenyl groups such as vinyl groups, and a photopolymerization initiator, addition reaction-based silicone compositions that use the same platinum group metal-based catalysts as heat-curable, addition reaction-type compositions, and cationic polymerization-based silicone compositions comprising an organopolysiloxane containing epoxy groups, and an onium salt catalyst, and any of these compositions can be used as an ultraviolet light-curable silicone composition.

Examples of electron beam-curable silicone compositions that can be used include any of the silicone compositions that are cured by a radical polymerization that is initiated by irradiating an organopolysiloxane containing radical polymerizable groups with an electron beam.

Examples of addition-curable silicone compositions include silicone compositions that are cured by reacting an aforementioned linear organopolysiloxane having alkenyl groups with an organohydrogenpolysiloxane (via a hydrosilylation addition reaction) in the presence of a platinum group metal-based catalyst.

Examples of condensation-curable silicone compositions include silicone compositions that are cured by conducting a reaction between an organopolysiloxane with both terminals blocked with silanol groups, and an organohydrogenpolysiloxane or a hydrolyzable silane such as a tetraalkoxysilane or an organotrialkoxysilane and/or a partial hydrolysis-condensation product thereof, in the presence of a condensation reaction catalyst such as an organotin-based catalyst, or silicone compositions that are cured by reacting an organopolysiloxane with both terminals blocked with trialkoxy groups, dialkoxyorgano groups, trialkoxysiloxyethyl groups or dialkoxyorganosiloxyethyl groups, in the presence of a condensation reaction catalyst such as an organotin-based catalyst.

However, from the viewpoint of avoiding, as far as possible, the incorporation of impurities, radiation-curable silicone compositions and organic peroxide-curable silicone compositions are preferred.

Each of the above reactive silicone compositions is described below in detail.

### - Organic Peroxide-Curable Silicone Compositions

Specific examples of organic peroxide-curable silicone compositions include compositions comprising:
(a) an organopolysiloxane containing at least two alkenyl groups bonded to silicon atoms,
(b) an organic peroxide, and, as an optional component
(c) an organohydrogenpolysiloxane containing at least two hydrogen atoms bonded to silicon atoms (namely, SiH groups), in an amount that provides 0.1 to 2 mols of hydrogen atoms bonded to silicon atoms within the component (c) per 1 mol of alkenyl groups within the entire curable silicone composition.

### -- Component (a)

The organopolysiloxane of the component (a) is the base polymer of the organic peroxide-curable silicone composition. There are no particular limitations on the polymerization degree of the organopolysiloxane of the component (a), and organopolysiloxanes that are liquid at 25 °C through to natural rubber-type organopolysiloxanes can be used as the component (a), but the average polymerization degree is preferably within a range from 50 to 20,000, more preferably from 100 to 10,000, and still more preferably from 100 to approximately 2,000. Further, from the viewpoint of ease of availability of the raw material, the organopolysiloxane of the component (a) is preferably basically a linear structure with no branching, in which the molecular chain is composed of repeating diorganosiloxane units (R¹₂SiO_{2/2} units) and both molecular chain terminals are blocked with triorganosiloxy groups (R¹₃SiO_{1/2}) or hydroxydiorganosiloxy groups ((HO)R¹₂SiO_{1/2} units), or a cyclic structure with no branching in which the molecular chain is composed of repeating diorganosiloxane units, although the structure may partially include some branched structures such as trifunctional siloxane units or SiO₂ units. In the above description, R¹ is as defined below within the description of formula (1).

Examples of organopolysiloxanes that can be used as the component (a) include organopolysiloxanes having at least two alkenyl groups within each molecule, as represented by an average composition formula (1) shown below:

R¹ₐSiO_{(4-a)/2} (1)

wherein R¹ represents identical or different, unsubstituted or substituted monovalent hydrocarbon groups of 1 to 10 carbon atoms, and preferably 1 to 8 carbon atoms, 50 to 99 mol% of the R¹ groups are alkenyl groups, and a represents a positive number within a range from 1.5 to 2.8, preferably from 1.8 to 2.5, and more preferably from 1.95 to 2.05.

Specific examples of R¹ include alkyl groups such as a methyl group, ethyl group, propyl group, butyl group, pentyl group and hexyl group; aryl groups such as a phenyl group, tolyl group, xylyl group and naphthyl group; cycloalkyl groups such as a cyclopentyl group and cyclohexyl group; alkenyl groups such as a vinyl group, allyl group, propenyl group, isopropenyl group and butenyl group; and groups in which some or all of the hydrogen atoms within one of the above hydrocarbon groups have each been substituted with a halogen atom such as a fluorine atom, bromine atom or chlorine atom, or a cyano group or the like, including a chloromethyl group, chloropropyl group, bromoethyl group, trifluoropropyl group and cyanoethyl group, although from the viewpoint of achieving high purity, the R¹ groups are preferably composed solely of hydrocarbon groups.

In this case, at least two of the R¹ groups represent alkenyl groups (and in particular, alkenyl groups that preferably contain from 2 to 8 carbon atoms, and more preferably from 2 to 6 carbon atoms). The alkenyl group content among the total of all the organic groups bonded to silicon atoms (that is, among all the unsubstituted and substituted monovalent hydrocarbon groups represented by R¹ within the above average composition formula (1)) is preferably within a range from 50 to 99 mol%, and more preferably from 75 to 95 mol%. In those cases where the organopolysiloxane of the component (a) has a linear structure, these alkenyl groups may be bonded solely to silicon atoms at the molecular chain terminals, solely to non-terminal silicon atoms within the molecular chain, or to both these types of silicon atoms.

### -- Component (b)

The component (b),is an organic peroxide that is used as a catalyst for accelerating the cross-linking reaction of the component (a) in the organic peroxide-curable organopolysiloxane composition. Any conventional organic peroxide can be used as the component (b), provided it is capable of accelerating the cross-linking reaction of the component (a). Specific examples of the component (b) include benzoyl peroxide, 2,4-dichlorobenzoyl peroxide, p-methylbenzoyl peroxide, o-methylbenzoyl peroxide, 2,4-dicumyl peroxide, 2,5-dimethyl-bis(2,5-t-butylperoxy)hexane, di-t-butyl peroxide, t-butyl perbenzoate and 1,1-bis(t-butylperoxycarboxy)hexane, although this is not an exhaustive list.

The amount added of the component (b) must be an amount that is effective as a catalyst for accelerating the cross-linking reaction of the component (a). This amount is preferably within a range from 0.1 to 10 parts by mass, and more preferably from 0.2 to 2 parts by mass, per 100 parts by mass of the component (a). If the amount added of the component (b) is less than 0.1 parts by mass per 100 parts by mass of the component (a), then the time required for curing lengthens, which is economically undesirable. Further, if the amount added exceeds 10 parts by mass per 100 parts by mass of the component (a), then foaming caused by the component (b) tends to occur, and the strength and heat resistance of the cured reaction product tend to be adversely affected.

### -- Component (c)

The organohydrogenpolysiloxane of the component (c), which is an optional component, contains at least two (typically from 2 to 200), and preferably three or more (typically from 3 to 100) hydrogen atoms bonded to silicon atoms (SiH groups). Even when only the component (a) is used, curing can be achieved by adding the component (b) and heating, but by also adding the component (c), because the reaction with the component (a) proceeds readily, curing can be performed at a lower temperature and within a shorter period of time than the case where only the component (a) is used. There are no particular limitations on the molecular structure of the component (c), and conventionally produced linear, cyclic, branched, or three dimensional network (resin-like) organohydrogenpolysiloxanes can be used as the component (c). In those cases where the component (c) has a linear structure, the SiH groups may be bonded solely to silicon atoms at the molecular chain terminals or solely to non-terminal silicon atoms within the molecular chain, or may also be bonded to both these types of silicon atoms. Furthermore, the number of silicon atoms within each molecule (or the polymerization degree) is typically within a range from 2 to 300, and is preferably from 4 to approximately 150. An organohydrogenpolysiloxane that is liquid at room temperature (25°C) can be used particularly favorably as the component (c).

Examples of the component (c) include organohydrogenpolysiloxanes represented by an average composition formula (2) shown below:

R²_{b}HₑSiO_{(4-b-c)/2} (2)

wherein R² represents identical or different, unsubstituted or substituted monovalent hydrocarbon groups containing no aliphatic unsaturated bonds and containing 1 to 10 carbon atoms, and preferably 1 to 8 carbon atoms, and b and c represent positive numbers that preferably satisfy 0.7≤b≤2.1, 0.001≤c≤1.0 and 0.8≤b+c≤3.0, and more preferably satisfy 1.0≤b≤2.0, 0.01≤c≤1.0 and 1.5≤b+c≤2,5.
Examples of R² include the same groups as those described above for R¹ within the above average composition formula (1) (but excluding the alkenyl groups).

Specific examples of organohydrogenpolysiloxanes represented by the above average composition formula (2) include 1,1,3,3-tetramethyldisiloxane, 1,3,5,7-tetramethylcyclotetrasiloxane, tris(hydrogendiethylsiloxy)methylsilane, tris{hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with methylhydrogensiloxy groups, copolymers of methylhydrogensiloxane and dimethylsiloxane with both terminals blocked with methylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with methylhydrogensiloxy groups, copolymers of methylhydrogensiloxane, methylphenylsiloxane and dimethylsiloxane with both terminals blocked with methylhydrogensiloxy groups, copolymers composed of (CH₃)₂HSiQ_{1/2} units, (CH₃)₂SiO_{2/2} units and SiO_{4/2} units, copolymers composed of (CH₃)₂HSiO_{1/2} units and SiO_{4/2} units, and copolymers composed of (C₃)₂HSiO_{1/2} units, SiO_{4/2} units, and (C₆H₅)₃SiO_{1/2} units.

The amount added of the component (c) is arbitrary, but is preferably within a range from 0 to 100 parts by mass, and more preferably from 0 to 50 parts by mass, per 100 parts by mass of the component (a). If the amount added of the component (c) exceeds 100 parts by mass per 100 parts by mass of the component (a), then foaming caused by the component (c) tends to occur, and the strength and heat resistance of the cured reaction product tend to be adversely affected.

### - Ultraviolet Light-Curable Silicone Compositions

Specific examples of ultraviolet light-curable silicone compositions include compositions comprising:
(d) an ultraviolet light-reactive organopolysiloxane, and
(e) a photopolymerization initiator.

### -- Component (d)

The ultraviolet light-reactive organopolysiloxane of the component (d) typically functions as the base polymer in the ultraviolet light-curable silicone composition. Although there are no particular limitations on the component (d), the component (d) is preferably an organopolysiloxane containing at least two, more preferably from 2 to 20, and most preferably from 2 to 10, ultraviolet light-reactive groups within each molecule. The plurality of ultraviolet light-reactive groups that exist within this organopolysiloxane may be the same or different.

From the viewpoint of ease of availability of the raw material, the organopolysiloxane of the component (d) is preferably basically either a linear structure with no branching, in which the molecular chain (the main chain) is composed of repeating diorganosiloxane units (R¹₂SiO_{2/2} units), and both molecular chain terminals are blocked with triorganosiloxy groups (R¹₃SiO_{1/2}), or a cyclic structure with no branching in which the molecular chain is composed of repeating diorganosiloxane units, although the structure may partially include some branched structures such as trifunctional siloxane units or SiO₂ units. In the above description, R¹ is the same as defined above in relation to formula (1). In those cases where the organopolysiloxane of the component (d) has a linear structure, the ultraviolet light-reactive groups may exist solely at the molecular chain terminals or solely at non-terminal positions within the molecular chain, or may also exist at both these positions, although structures containing ultraviolet light-reactive groups at least at both molecular chain terminals are preferred.

Examples of the ultraviolet light-reactive groups include alkenyl groups such as a vinyl group, allyl group and propenyl group; alkenyloxy groups such as a vinyloxy group, allyloxy group, propenyloxy group and isopropenyloxy group; aliphatic unsaturated groups other than alkenyl groups, such as an acryloyl group and methacryloyl group; as well as an epoxy group and hydrosilyl group, and of these, an acryloyl group, methacryloyl group, mercapto group, epoxy group or hydrosilyl group is preferred, and an acryloyl group or methacryloyl group is particularly desirable.

Although there are no particular limitations on the viscosity of the organopolysiloxane, the viscosity at 25°C is preferably within a range from 100 to 1,000,000 mPa·s, more preferably from 200 to 500,000 mPa·s, and still more preferably from 200 to 100,000 mPa·s.

Examples of preferred forms of the component (d) include organopolysiloxanes containing at least two ultraviolet light-reactive groups, represented by either a general formula (3a) shown below:

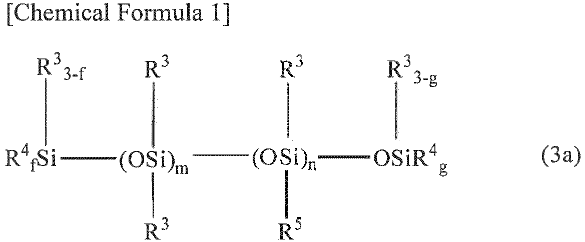

wherein R³ represents identical or different, unsubstituted or substituted monovalent hydrocarbon groups that contain no ultraviolet light-reactive groups, R⁴ represents identical or different groups that contain an ultraviolet light-reactive group, R⁵ represents identical or different groups that contain an ultraviolet light-reactive group, m represents an integer of 5 to 1,000, n represents an integer of 0 to 100, f represents an integer of 0 to 3, and g represents an integer of 0 to 3, provided that f+g+n≥2,
or a general formula (3b) shown below:

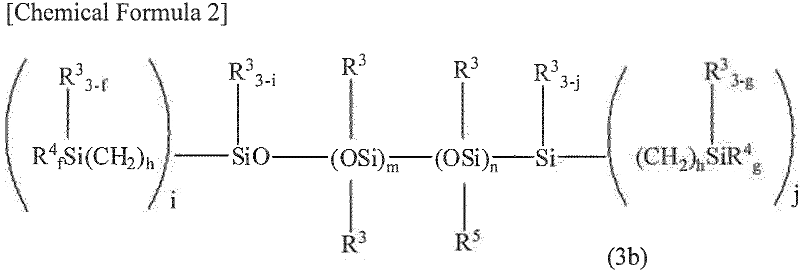

wherein R³, R⁴, R⁵, m, n, f and g are as defined above for the general formula (3a), h represents an integer of 2 to 4, and i and j each represents an integer of 1 to 3, provided that fi+gj+n≥2.

In the above general formulas (3a) and (3b), R³ represents identical or different, unsubstituted or substituted monovalent hydrocarbon groups that contain no ultraviolet light-reactive groups and preferably contain from 1 to 20 carbon atoms, more preferably from 1 to 10 carbon atoms, and most preferably from 1 to 8 carbon atoms. Examples of the monovalent hydrocarbon groups represented by R³ include alkyl groups such as a methyl group, ethyl group, propyl group, butyl group, pentyl group and hexyl group; aryl groups such as a phenyl group, tolyl group, xylyl group and naphthyl group; cycloalkyl groups such as a cyclopentyl group, cyclohexyl group and cyclopentyl group; aralkyl groups such as a benzyl group and phenylethyl group; and groups in which some or all of the hydrogen atoms within one of the above hydrocarbon groups have each been substituted with a halogen atom, cyano group or carboxyl group or the like, including a chloromethyl group, chloropropyl group, bromoethyl group, trifluoropropyl group, cyanoethyl group and 3-cyanopropyl group, and of these, a methyl group or phenyl group is preferred, and a methyl group is particularly desirable. Furthermore, the monovalent hydrocarbon group represented by R³ may also include one or more sulfonyl groups, ether linkages (-O-) and/or carbonyl groups or the like within the group structure.

In the above general formulas (3a) and (3b), examples of the ultraviolet light-reactive groups contained within the groups R⁴ and R⁵ include alkenyl groups such as a vinyl group, allyl group and propenyl group; alkenyloxy groups such as a vinyloxy group, allyloxy group, propenyloxy group and isopropenyloxy group; aliphatic unsaturated groups other than alkenyl groups, such as an acryloyl group and methacryloyl group; as well as a mercapto group, epoxy group and hydrosilyl group, and of these, an acryloyl group, methacryloyl group, epoxy group or hydrosilyl group is preferred, and an acryloyl group or methacryloyl group is particularly desirable. Accordingly, the groups containing an ultraviolet light-reactive group represented by R⁴ and R⁵ are monovalent groups that contain any of the above ultraviolet light-reactive groups, and specific examples of R⁴ and R⁵ include a vinyl group, allyl group, 3-glycidoxypropyl group, 2-(3,4-epoxycyclohexyl)ethyl group, 3-methacryloyloxypropyl group, 3-acryloyloxypropyl group, 3-mercaptopropyl group, 2-{bis(2-methacryloyloxyethoxy)methylsilyl}ethyl group, 2-{bis(2-acryloyloxyethoxy)methylsilyl}ethyl group, 2-{(2-acryloyloxyethoxy)dimethylsilyl}ethyl group, 2-{bis(1,3-dimethacryloyloxy-2-propoxy)methylsilyl}ethyl group, 2-{(1,3-dimethacryloyloxy-2-propoxy)di ethylsilyl}ethyl group, 2-{bis{1-acryloyloxy-3-methacryloyloxy-2-propoxy)methylsilyl}ethyl group and 2-{bis(1-acryloyloxy-3-methacryloyloxy-2-propoxy)dimethylsilyl}ethyl group, and examples of preferred groups include a 3-methaeryloyloxypropyl group, 3-acryloyloxypropyl group, 2-{bis(2-methacryloyloxyethoxy) methylsilyl}ethyl group, 2-{bis(2-acryloyloxyethoxy)methylsilyl}ethyl group, 2-{(2-acryloyloxyethoxy)dimethylsilyl}ethyl group, 2-{(1,3-dimethacryloyloxy-2-propoxy)dimethylsilyl}ethyl group, 2-{bis(1-acryloyloxy-3-methacryloyloxy-2-propoxy)methylsilyl}ethyl group and 2-{bis(1-acryloyloxy-3-methacryloyloxy-2-propoxy)dimethylsilyl}ethyl group. R⁴ and R⁵ may be either the same or different, and individual R⁴ and R⁵ groups may be the same as, or different from, other R⁴ and R⁵ groups.

In the above general formulas (3a) and (3b), m is typically an integer of 5 to 1,000, preferably an integer of 10 to 800, and more preferably an integer of 50 to 500. n is typically an integer of 0 to 100, preferably an integer of 0 to 50, and more preferably an integer of 0 to 20. f is an integer of 0 to 3, preferably an integer of 0 to 2, and more preferably 1 or 2. g is an integer of 0 to 3, preferably an integer of 0 to 2, and more preferably 1 or 2. In the above general formula (3b), h is typically an integer of 2 to 4, and is preferably 2 or 3. Each of i and j represents an integer of 1 to 3, and preferably an integer of 1 or 2. Moreover, as described above, the organopolysiloxanes represented by the above general formulas (3a) and (3b) contain at least two of the above ultraviolet light-reactive groups, and consequently f+g+n≥2 in the formula (3a), and fi+gj+n≥2 in the formula (3b).

Specific examples of organopolysiloxanes represented by the above formulas (3a) and (3b) include the compounds shown below.

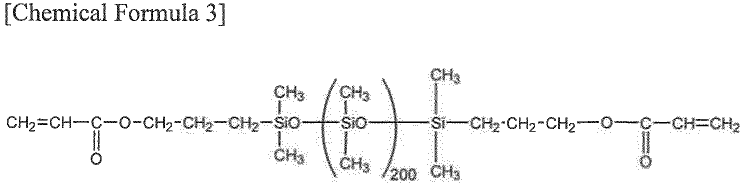

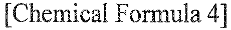

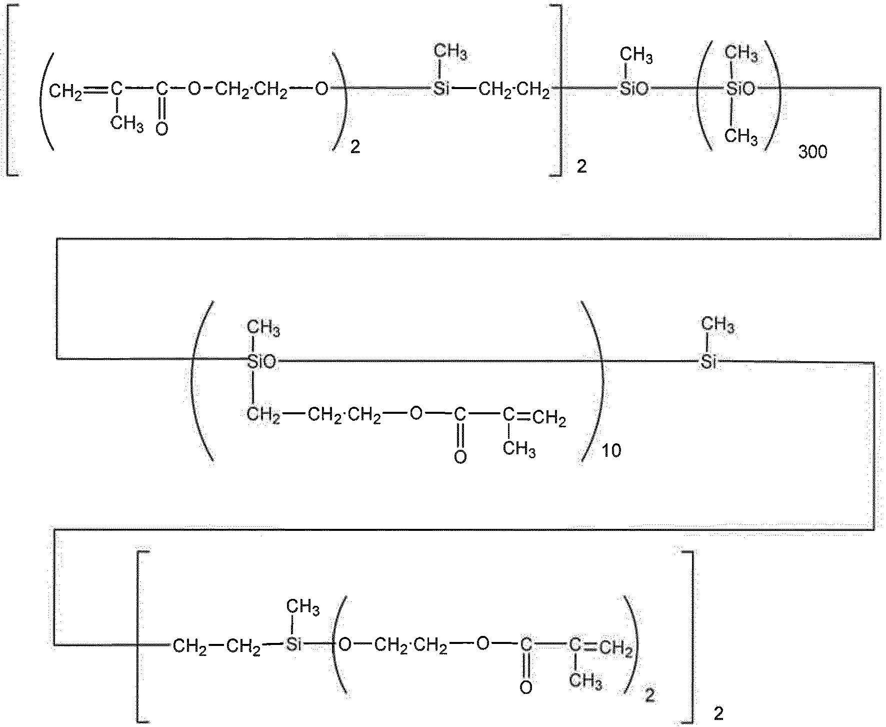

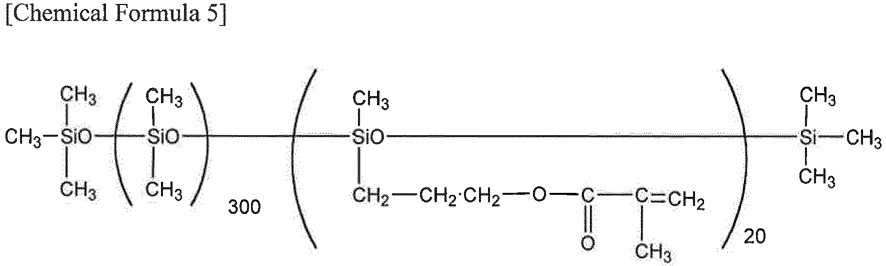

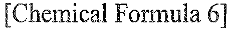

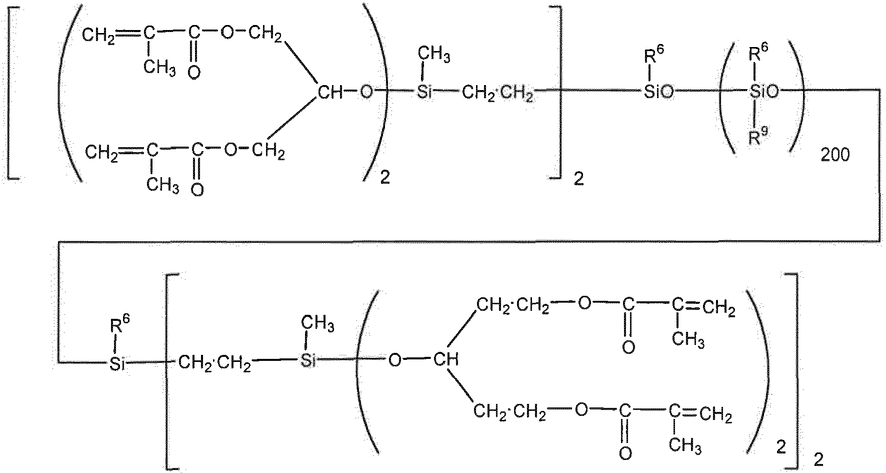

In the above formulas, the R⁶ groups are 90% methyl groups and 10% phenyl groups.

### -- Component (e)

The photopolymerization initiator of the component (e) has the effect of accelerating the photopolymerization of the ultraviolet light-reactive groups within the above component (d). There are no particular limitations on the component (e), and specific examples thereof include acetophenone, propiophenone, benzophenone, xanthol, fluorein, benzaldehyde, anthraquinone, triphenylamine, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl) ketone, benzyl methoxy acetal, 2-chlorothioxanthone, diethylacetophenone, 1-hydroxychlorophenyl ketone, 1-hydroxycyclohexyl phenyl ketone, 2-methyl-(4-(methylthio)phenyl)-2-morpholino-1-propane, 2,2-dimethoxy-2-phenylacetophenone, diethoxyacetophenone, and 2-hydroxy-2-methyl-1-phenylpropan-1-one. From the viewpoint of ensuring high purity, benzophenone, 4-methoxyacetophenone, 4-methylbenzophenone, diethoxyacetophenone, 1-hydroxycyclohexyl phenyl ketone and 2-hydroxy-2-methyl-1-phenylpropan-1-one are preferred, and diethoxyacetophenone, 1-hydroxycyclohexyl phenyl ketone and 2-hydroxy-2-methyl-1-phenylpropan-1-one are particularly desirable. Any one of these photopolymerization initiators may be used alone, or two or more different initiators may be used in combination.

Although there are no particular limitations on the amount added of the component (e), the amount is preferably within a range from 0.01 to 10 parts by mass, more preferably from 0.1 to 3 parts by mass, and still more preferably from 0.5 to 3 parts by mass, per 100 parts by mass of the component (d). Provided the amount added falls within the above range, curing of the silicone composition can be more readily controlled.

### - Addition-Curable Silicone Compositions

Specific examples of addition-curable silicone compositions include compositions comprising:
(f) an organopolysiloxane containing at least two alkenyl groups bonded to silicon atoms,
(g) an organohydrogenpolysiloxane containing at least two hydrogen atoms bonded to silicon atoms (namely, SiH groups), in an amount that provides 0.1 to 5 mols of hydrogen atoms bonded to silicon atoms within the component (g) per 1 mol of alkenyl groups within the entire curable silicone composition, and
(h) an effective amount of a platinum group metal-based catalyst.

### -- Component (f)

The organopolysiloxane of the component (f) is the base polymer of the addition-curable silicone composition, and contains at least two alkenyl groups bonded to silicon atoms. Conventional organopolysiloxanes can be used as the component (f). The weight-average molecular weight of the organopolysiloxane of the component (f), measured by gel permeation chromatography (hereinafter abbreviated as GPC) and referenced against polystyrene standards, is preferably within a range from approximately 3,000 to 300,000. Moreover, the viscosity at 25°C of the organopolysiloxane of the component (f) is preferably within a range from 100 to 1,000,000 mPa·s, and is more preferably from approximately 1,000 to 100,000 mPa·s. If the viscosity is 100 mPa·s or less, then the thread-forming ability of the composition is poor, and narrowing the diameter of fibers becomes difficult, whereas if the viscosity is 1,000,000 mPa·s or greater, then handling becomes difficult. From the viewpoint of ease of availability of the raw material, the organopolysiloxane of the component (f) is basically either a linear structure with no branching, in which the molecular chain (the main chain) is composed of repeating diorganosiloxane units (R⁷₂SiO_{2/2} units), and both molecular chain terminals are blocked with triorganosiloxy groups (R⁷₃SiO_{1/2}), or a cyclic structure with no branching in which the molecular chain is composed of repeating diorganosiloxane units, although the structure may partially include some branched structures including R⁷SiO_{3/2} units and/or SiO_{4/2} units. In the above description, R⁷ is the same as defined below within the description of formula (4).

Examples of organopolysiloxanes that can be used as the component (f) include organopolysiloxanes having at least two alkenyl groups within each molecule, as represented by an average composition formula (4) shown below:

R⁷₁SiO_{(4-1)/2} (4)

wherein R⁷ represents identical or different, unsubstituted or substituted monovalent hydrocarbon groups of 1 to 10 carbon atoms, and preferably 1 to 8 carbon atoms, and 1 represents a positive number that is preferably within a range from 1.5 to 2.8, more preferably fro 1.8 to 2.5, and still more preferably from 1.95 to 2.05. Examples of R⁷ include the same groups as those described above in the average composition formula (1).

In this case, at least two of the R⁷ groups represent alkenyl groups (and in particular, alkenyl groups that preferably contain from 2 to 8 carbon atoms, and even more preferably from 2 to 6 carbon atoms). The alkenyl group content among the total of all the organic groups bonded to silicon atoms (that is, among all the unsubstituted and substituted monovalent hydrocarbon groups represented by R⁷ within the above average composition formula (4)) is preferably within a range from 50 to 99 mol%, and more preferably from 75 to 95 mol%. In those cases where the organopolysiloxane of the component (f) has a linear structure, these alkenyl groups may be bonded solely to silicon atoms at the molecular chain terminals or solely to non-terminal silicon atoms within the molecular chain, or may also be bonded to both these types of silicon atoms, but from the viewpoints of the composition curing rate and the physical properties of the resulting cured product and the like, at least one alkenyl group is preferably bonded to a silicon atom at a molecular chain terminal.

### -- Component (g)

The organohydrogenpolysiloxane of the component (g) contains at least two (typically from 2 to 200), and preferably three or more (typically from 3 to 100) hydrogen atoms bonded to silicon atoms (SiH groups). The component (g) reacts with the component (f) and functions as a cross-linking agent. There are no particular limitations on the molecular structure of the component (g), and conventionally produced linear, cyclic, branched, or three dimensional network (resin-like) organohydrogenpolysiloxanes can be used as the component (b). In those cases where the component (g) has a linear structure, the SiH groups may be bonded solely to silicon atoms at the molecular chain terminals or solely to non-terminal silicon atoms within the molecular chain, or may also be bonded to both these types of silicon atoms. Furthermore, the numbers of silicon atoms within each molecule (or the polymerization degree) is typically within a range from 2 to 300, and is preferably from 4 to approximately 150. An organohydrogenpolysiloxane that is liquid at room temperature (25 °C) can be used particularly favorably as the component (g).

Examples of the component (g) include organohydrogenpolysiloxanes represented by an average composition formula (5) shown below.

R⁸ₚH_{q}SiO_{(4-p-q)/2} (5)

wherein R⁸ represents identical or different, unsubstituted or substituted monovalent hydrocarbon groups containing no aliphatic unsaturated bonds and containing 1 to 10 carbon atoms, and preferably 1 to 8 carbon atoms, and p and q represent positive numbers that preferably satisfy 0.7≤p≤2.1, 0.001≤qv1.0 and 0.8≤p+q≤3.0, and more preferably satisfy 1.0≤p≤2.0, 0.01≤q≤1.0 and 1.5≤p+q≤2.5.
Examples of R⁸ include the same groups as those described above for R¹ in the average composition formula (1) (but excluding the alkenyl groups).

Specific examples of organohydrogenpolysiloxanes represented by the above average composition formula (3) include 1,1,3,3-tetrethyldisiloxe, 1,3,5,7-tetramethylcyclotetrasiloxane, tris(hydrogendimethylsiloxy)ethylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with methylhydrogensiloxy groups, copolymers of methylhydrogensiloxane and dimethylsiloxane with both terminals blocked with methylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with methylhydrogensiloxy groups, copolymers of methylhydrogensiloxane, methylphenylsiloxane and dimethylsiloxane with both terminals blocked with methylhydrogensiloxy groups, copolymers composed of (CH₃)₂HSiO_{1/2} units, (CH₃)₂SiO_{2/2} units and SiO_{4/2} units, copolymers composed of (CH₃)₂HSiO_{1/2} units and SiO_{4/2} units, and copolymers composed of (CH₃)₂HSiO_{1/2} units, SiO_{4/2} units, and (C₆H₅)₃SiO_{1/2} units.

The amount added of the component (g) must be sufficient to provide from 0.1 to 5.0 mols, preferably from 0.5 to 3.0 mols, and more preferably from 0.8 to 2.0 mols, of SiH groups within this component (g) per 1 mol of alkenyl groups within the entire curable silicone composition, and in particular, per 1 mol of alkenyl groups bonded to silicon atoms within the entire curable silicone composition, and especially per 1 mol of alkenyl groups bonded to silicon atoms within the component (f). The proportion of the alkenyl groups bonded to silicon atoms within the component (f) relative to the total number of alkenyl groups that exist within the entire curable silicone composition is preferably within a range from 80 to 100 mol%, and more preferably from 90 to 100 mol%. In those cases where the component (f) is the only component that contains alkenyl groups within the entire curable silicone composition, the amount of SiH groups within the component (g) per 1 mol of alkenyl groups within the component (f) is typically within a range from 0.1 to 5.0 mols, preferably from 0.5 to 3.0 mols, and more preferably from 0.8 to 2.0 mols. If the amount added of the component (g) yields an amount of SiH groups that is less than 0.1 mols, then the time required for curing lengthens, which is economically undesirable. Further, if the amount added yields an amount of SiH groups that exceeds 5.0 mols, then foaming caused by a dehydrogenation reaction tends to occur within the curing reaction product, and the strength and heat resistance of the cured reaction product tend to be adversely affected.

### -- Component (h)

The platinum group metal-based catalyst of the component (h) is used for accelerating the addition curing reaction (the hydrosilylation reaction) between the component (f) and the component (g). Conventional platinum group metal-based catalysts can be used as the component (h), but the use of platinum or a platinum compound is preferred. Specific examples of the component (h) include platinum black, platinic chloride, chloroplatinic acid, alcohol-modified chloroplatinic acid, and complexes of chloroplatinic acid with olefins, aldehydes, vinylsiloxanes or acetylene alcohols.

The amount added of the component (h) need only be an effective catalytic quantity, may be suitably increased or decreased in accordance with the desired curing reaction rate, and preferably provides a mass of the platinum group metal relative to the mass of the component (f) that falls within a range from 0.1 to 1,000 ppm, and more preferably from 0.2 to 100 ppm.

### - Condensation-Curable Silicone composition

Specific examples of condensation-curable silicone compositions include compositions comprising:
(i) an organopolysiloxane containing at least two silanol groups (namely, silicon atom-bonded hydroxyl groups) or silicon atom-bonded hydrolyzable groups, preferably at both molecular chain terminals,
(j) a hydrolyzable silane and/or a partial hydrolysis-condensation product thereof as an optional component, and
(k) a condensation reaction catalyst as another optional component.

### -- Component (i)

The component (i) is an organopolysiloxane that contains at least two silanol groups or silicon atom-bonded hydrolyzable groups, and functions as the base polymer of the condensation-curable silicone composition. From the viewpoint of ease of availability of the raw material, the organopolysiloxane of the component (i) is preferably basically either a linear structure with no branching, in which the molecular chain (the main chain) is composed of repeating diorganosiloxane units (R⁹₂SiO_{2/2} units), and both molecular chain terminals are blocked with triorganosiloxy groups (R⁹₃SiO_{1/2}), or a cyclic structure with no branching in which the molecular chain is composed of repeating diorganosiloxane units, although the structure may partially include some branched structures. In the above description, R⁹ represents an unsubstituted or substituted monovalent hydrocarbon group of 1 to 10 carbon atoms, and preferably 1 to 8 carbon atoms.

In the organopolysiloxane of the component (i), examples of the hydrolyzable groups other than silanol groups include acyloxy groups such as an acetoxy group, octanoyloxy group and benzoyloxy group; ketoxime groups (namely, iminoxy groups) such as a dimethyl ketoxime group, methyl ethyl ketoxime group and diethyl ketoxime group; alkoxy groups such as a methoxy group, ethoxy group and propoxy group; alkoxyalkoxy groups such as a methoxyethoxy group, ethoxyethoxy group and methoxypropoxy group; alkenyloxy groups such as a vinyloxy group, isopropenyloxy group and 1-ethyl-2-ethylvinyloxy group; amino groups such as a dimethylamino group, diethylamino group, butylamino group and cyclohexylamino group; aminoxy groups such as a dimethylaminoxy group and diethylaminoxy group; and amide groups such as an N-methylacetamide group, N-ethylacetamide group and N-methylbenzamide group.

These hydrolyzable groups are preferably positioned at both molecular chain terminals of a linear diorganopolysiloxane, preferably in the for of either siloxy groups that contain two or three hydrolyzable groups, or siloxyalkyl groups that contain two or three hydrolyzable groups, including trialkoxysiloxy groups, dialkoxyorganosiloxy groups, triacyloxysiloxy groups, diacyloxyorganosiloxy groups, triiminoxysiloxy groups (namely, triketoximesiloxy groups), diiminoxyorganosiloxy groups, trialkenoxysiloxy groups, dialkenoxyorganosiloxy groups, trialkoxysiloxyethyl groups and dialkoxyorganosiloxyethyl groups.

Examples of the other monovalent hydrocarbon groups bonded to silicon atoms include the same unsubstituted and substituted monovalent hydrocarbon groups as those described above for R¹ in the average composition formula (1).

Specific examples of the component (i) include the compounds shown below.

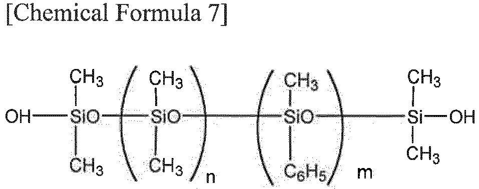

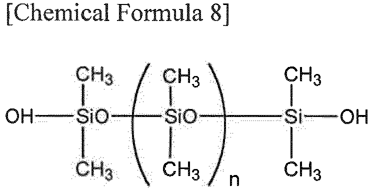

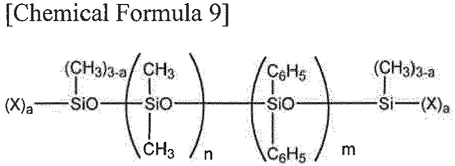

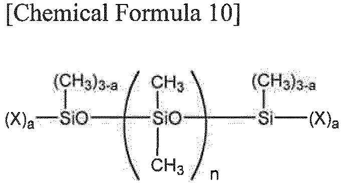

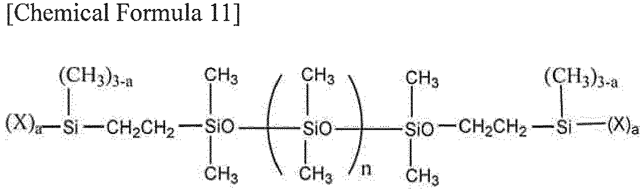

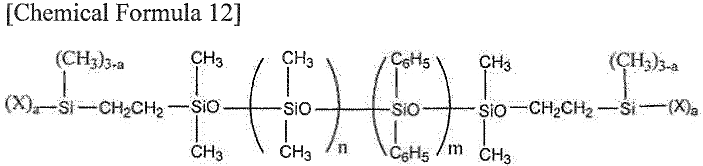

In the above formulas, X represents a hydrolyzable group other than a silanol group, a represents 1, 2 or 3, and each of n and represents an integer of 1 to 1,000.

Specific examples of the component (i) include dimethylpolysiloxane with both molecular chain terminals blocked with silanol groups, copolymers of dimethylsiloxane and methylphenylsiloxane with both molecular chain terminals blocked with silanol groups, copolymers of dimethylsiloxane and diphenylpolysiloxane with both molecular chain terminals blocked with silanol groups, dimethylpolysiloxane with both molecular chain terminals blocked with trimethoxysiloxy groups, copolymers of dimethylsiloxane and methylphenylsiloxane with both molecular chain terminals blocked with trimethoxysiloxy groups, copolymers of dimethylsiloxane and diphenypolylsiloxane with both molecular chain terminals blocked with trimethoxysiloxy groups, and dimethylpolysiloxane with both molecular chain terminals blocked with 2-trimethoxysiloxyethyl groups. Any one of these compounds may be used alone, or two or more different compounds may be used in combination.

### -- Component (j)

The hydrolyzable silane and/or partial hydrolysis-condensation product thereof of the component (j) is an optional component, and functions as a curing agent. In those cases where the base polymer of the component (i) is an organopolysiloxane that contains at least two silicon atom-bonded hydrolyzable groups other than silanol groups within each molecule, the addition of the component (j) to the condensation-curable silicone composition can be omitted. Silanes containing at least three silicon atom-bonded hydrolyzable groups within each molecule and/or partial hydrolysis-condensation products thereof (namely, organopolysiloxanes that still retain at least one, and preferably two or more of the hydrolyzable groups) can be used particularly favorably as the component (j).

Examples of compounds that can be used favorably as the above silane include compounds represented by a formula (6) shown below:

R¹⁰ᵣSiX₄₋ᵣ (6)

wherein R¹⁰ represents an unsubstituted or substituted monovalent hydrocarbon group of 1 to 10 carbon atoms, and preferably 1 to 8 carbon atoms, X represents a hydrolyzable group, and r represents either 0 or 1. Examples of preferred groups for R¹⁰ include alkyl groups such as a methyl group, ethyl group, propyl group, butyl group, pentyl group and hexyl group; aryl groups such as a phenyl group and tolyl group; and alkenyl groups such as a vinyl group and allyl group.

Specific examples of the component (j) include methyltriethoxysilane, vinyltriethoxysilane, vinyltriacetoxysilane, ethyl orthosilicate, and partial hydrolysis-condensation products of these compounds. Any one of these compounds may be used alone, or two or more different compounds may be used in combination.

In those cases where a hydrolyzable silane and/or partial hydrolysis-condensation product thereof is used as the component (j), the amount added of the component (j) is preferably within a range from 0.01 to 20 parts by mass, and more preferably from 0.1 to 10 parts by mass, per 100 parts by mass of the component (i). In those cases where the component (j) is used, using an amount that satisfies the above range ensures that the composition of the present invention exhibits particularly superior storage stability and curing reaction rate.

### -- Component (k)

The condensation reaction catalyst of the component (k) is an optional component, and need not be used in cases where the above hydrolyzable silane and/or partial hydrolysis-condensation product thereof of the component (j) contains aminoxy groups, amino groups or ketoxime groups or the like. Examples of the condensation reaction catalyst of the component (k) include organotitanate esters such as tetrabutyl titanate and tetraisopropyl titanate; organotitanium chelate compounds such as diisopropoxybis(acetylacetonato)titanium and diisopropoxybis(ethylacetoacetate)titani organoaluminum compounds such as aluminum tris(acetylacetonate) and aluminum tris(ethylacetoacetate); organozirconium compounds such as zirconium tetra(acetylacetonate) and zirconium tetrabutyrate; organotin compounds such as dibutyltin dioctoate, dibutyltin dilaurate and dibutyltin di(2-ethylhexanoate); metal salts of organic carboxylic acids such as tin naphthenate, tin oleate, tin butyrate, cobalt naphthenate and zinc stearate; amine compounds or the salts thereof such as hexylamine and dodecylamine phosphate; quaternary ammonium salts such as benzyltriethylammonium acetate; lower fatty acid salts of alkali metals such as potassium acetate and lithium nitrate; dialkylhydroxylamines such as dimethylhydroxylamine and diethylhydroxylamine; and guanidyl group-containing organosilicon compounds. Any one of these catalysts may be used alone, or two or more different catalysts may be used in combination.

In those cases where a condensation reaction catalyst of the component (k) is used, there are no particular limitations on the amount added, but the amount is preferably within a range from 0.01 to 20 parts by mass, and more preferably from 0.1 to 10 parts by mass, per 100 parts by mass of the component (i). If the component (k) is used, then provided the amount satisfies the above range, the composition is economically viable from the viewpoints of the curing time and curing temperature.

### <Interposing Layer of Curable Silicone Composition>

In step (1), in those cases where the curable silicone composition is interposed between the silicon carbide members by applying a liquid curable silicone composition to one of the silicon carbide members and then bonding the other silicon carbide member to the resulting coating film, a solvent-free liquid composition, an aqueous emulsion-type composition, or a solution prepared by diluting the composition with an organic solvent such as toluene or tetrahydrofuran can be used. In those cases where the composition is a solvent-free liquid, the liquid is heated to achieve a viscosity within a range from 1 to 50,000 mPa·s, and preferably from 10 to 10,000 mPa·s, prior to application. In those cases where the composition is in the form of an aqueous emulsion or a solution that has been diluted with an organic solvent such as toluene or tetrahydrofuran, the viscosity at 25°C is adjusted to a value within a range from 1 to 50,000 mPa·s, and preferably from 10 to 10,000 mPa·s, and the composition is then applied to the silicon carbide member. The method used for applying the composition may employ coating, impregnation or spraying methods, but if the viscosity of the composition at the time of use exceeds 50,000 mPa·s, then forming a uniform coating film of the silicone composition becomes difficult.

Further, there are no particular limitations on the amount of the silicone composition applied, which may be adjusted in accordance with the volume of the substrate and the desired performance. Application is typically conducted so as to obtain the desired thickness mentioned below.

Once a coating film has been formed on the surface of one of the silicon carbide members in this manner, the other silicon carbide member is bonded to the coating film.

Another method of interposing a curable silicone composition between the two silicon carbide members involves sandwiching a premolded film or sheet of the curable silicone composition between the two silicon carbide members, and then applying pressure to bond the members together. In the case of this method, from the viewpoint of the handling properties of the composition, the film or sheet of the composition preferably has an appropriate level of flexibility and self shape retention, and preferably also exhibits surface pressure-sensitive adhesive properties.

In step (1), a layer of the curable silicone composition is provided between the two silicon carbide members in this manner. The thickness of the formed curable silicone composition layer is the main factor in determining the thickness of the final silicon carbide joining layer, and in a dried state, is preferably a thickness within a range from 1 nm to 1 mm, and more preferably from 0.5 µm to 500 µm.

### <Bonding by Curing the Curable Silicone Composition>

In step (2), curing of the layer of the curable silicone composition obtained in step (1) is performed, thereby bonding the two silicon carbide members together via the resulting cured product. The curing conditions used at this time may be set appropriately in accordance with the type of curable silicone composition used. This point is described below in further detail.

### - The case of an Organic Peroxide-Curable Silicone Composition:

Heating the structure obtained by applying a coating of the organic peroxide-curable silicone composition to one of the silicon carbide members and then bonding the silicone composition to the other silicon carbide member causes a radical reaction to proceed and the curing reaction to proceed, thereby curing the organic peroxide-curable silicone composition and bonding the members together. In terms of the temperature conditions employed for curing the organic peroxide-curable silicone composition, because the heating temperature used for the curing reaction is dependent on the thickness of the coating, namely, is dependent on the coating amount, although there are no particular limitations, the temperature is preferably within a range from 80 to 300°C, and more preferably from 150 to 250°C. Further, secondary curing may be performed if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

### - The case of Ultraviolet Light-Curable Silicone Composition:

Irradiating ultraviolet light onto the structure obtained by applying a coating of the ultraviolet light-curable silicone composition to one of the silicon carbide members and then bonding the silicone composition to the other silicon carbide member causes the photopolymerization initiator to react and the curing reaction to proceed, thereby curing the ultraviolet light-curable silicone composition. In terms of the ultraviolet light irradiation conditions, because the curing reaction is dependent on the thickness of the coating, namely, is dependent on the coating amount, although there are no particular limitations, curing can typically be conducted by performing the ultraviolet light irradiation using ultraviolet light emitting diodes with an emission wavelength of 365 mn, under conditions including an intensity of 5 to 500 mWlcm², and preferably 10 to 200 mW/cm² and an exposure dose of 0.5 to 100 J/cm², and preferably 10 to 50 J/cm². Further, secondary curing may also be conducted if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

### - The case of an Addition-Curable Silicone Composition:

Heating the structure obtained by applying a coating of the addition-curable silicone composition to one of the silicon carbide members and then bonding the silicone composition to the other silicon carbide member causes a hydrosilylation reaction to proceed, thereby curing the addition-curable silicone composition. In terms of the temperature conditions employed, because the curing reaction is dependent on the thickness of the coating, namely, is dependent on the coating amount, although there are no particular limitations, the temperature is preferably within a range from 80 to 300°C, and more preferably from 100 to 200°C. Further, secondary curing may be performed if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

### - The case of a Condensation-Curable Silicone Composition:

Heating the structure obtained by applying a coating of the condensation-curable silicone composition to one of the silicon carbide members and then bonding the silicone composition to the other silicon carbide member causes a condensation reaction to proceed, thereby curing the condensation-curable silicone composition. In terms of the temperature conditions employed for curing the condensation-curable silicone composition, because the heating temperature used for the curing reaction is dependent on the thickness of the coating, namely, is dependent on the coating amount, although there are no particular limitations, the temperature is preferably within a range from 80 to 300°C, and more preferably from 100 to 200°C. Further, secondary curing may be performed if required, and the temperature during such secondary curing is preferably not less than 120°C, and more preferably within a range from 150 to 250°C. The curing time is preferably within a range from 10 minutes to 48 hours, and more preferably from 30 minutes to 24 hours,

### <Conjugation by Inorganic Ceramization of the Silicone Cured Product>

In step (3), the layer of the silicone cured product obtained in step (2) is subjected to thermal decomposition. In other words, the cured product is subjected to a heat treatment in a non-oxidizing atmosphere, and the cured silicone is converted to silicon carbide and forms the silicon carbide joining layer.

The heat treatment is performed under a non-oxidizing atmosphere, and preferably under an inert gas atmosphere. Examples of the inert gas include nitrogen gas, argon gas and helium gas, and argon gas is particularly desirable in terms of obtaining a high-purity silicon carbide.

Further, the heat treatment is performed at a temperature exceeding 1,500°C but not higher than 2,200°C. This heating temperature is preferably 1,600°C or higher. Furthermore, the heating temperature is preferably not higher than 2,100°C, and more preferably 2,000°C or lower.

Prior to performing the heat treatment at the temperature described above, a temperature-raising process is typically first conducted in which a heat treatment is performed at a temperature within a range from 400 to 1,500°C under the same non-oxidizing atmosphere. The treatment at this temperature causes cleavage of the carbon-hydrogen bonds within the silicone cured product, causing elimination of hydrogen from the material, but the reaction and inorganic ceramization proceeds without the elimination of carbon or silicon, resulting in the generation of a product composed essentially of carbon, silicon and oxygen.

Subsequently, heating is performed at a temperature exceeding 1,500°C but not higher than 2,200°C. When the temperature exceeds 1,500°C, elimination of carbon monoxide from the above product starts to occur, eventually resulting in the formation of silicon carbide. If the temperature exceeds 2,200°C, then sublimation of silicon carbide becomes severe, which is undesirable.

The end point of the heat treatment can be specified, for example, as the point where heating of the heated product at 1,800°C for one hour yields a weight loss that is equivalent to less than 1% by weight of the original silicone composition.

### Examples

A more detailed description of the present invention is presented below based on an example and a comparative example, although the present invention is in no way limited by these examples.

### [Example 1]

### Materials:

(A) 100 parts by mass of a diorganopolysiloxane containing alkenyl groups within each molecule, represented by a formula shown below:

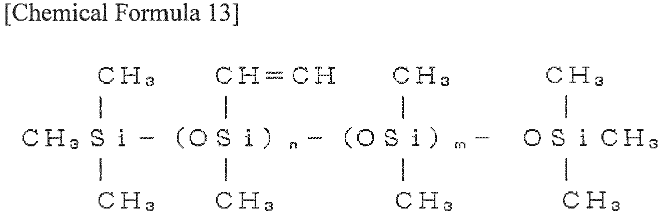

wherein n and m are numbers such that n/m = 4/1 and the viscosity of the siloxane at 25°C is 600 mPa·s.

(B) 0.5 parts by mass of be benzoyl peroxide.
(C) 33 parts by mass of a diorganopolysiloxane containing hydrogen atoms bonded to silicon atoms, represented by a formula shown below.

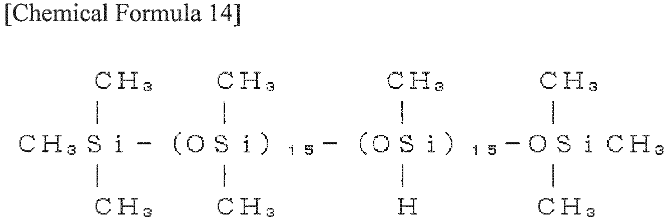

The above components (A) to (C) were combined in a planetary mixer (a registered trademark, a mixing device manufactured by Inoue Manufacturing Co., Ltd.), and were stirred for one hour at room temperature, yielding a curable silicone composition with a viscosity at room temperature of 1,000 mPa·s. Two silicon carbide members (20 mm square, thickness: 2 mm) were prepared. The above composition was applied in a thickness of 0.2 mm to one surface of one of the silicon carbide members, and one surface of the other silicon carbide member was then bonded to thus obtained coating film. The resulting structure composed of a silicone composition layer sandwiched between the two silicon carbide members was heated at a temperature of approximately 200°C for 30 minutes to cure the silicone composition layer, thereby bonding the two members together. The thus obtained bonded structure was placed inside a container formed from carbon, which was then placed inside an atmosphere furnace, and under an atmosphere of argon gas, the temperature was raised to 2,000°C over a 20-hour period at a rate of temperature increase of 100°C/hour, and then held at 2,000°C for two hours. Subsequently, the temperature was cooled to room temperature at a rate of 200°C/hour, yielding a silicon carbide conjugate.

### - Heat Resistance Test

The obtained silicon carbide conjugate was positioned with the joined surface aligned along the vertical direction, and under an atmosphere of argon gas, the temperature was raised from room temperature to 2,400°C over a 24-hour period at a rate of temperature increase of 100°C/hour, and the temperature of 2,400°C was then maintained for two hours. When the temperature was then cooled to room temperature, the external appearance and the integrity of the joined members were completely unchanged from the state prior to heating.

### - Analysis of Impurity Elements

With the exception of treating 5 g of the above curable silicone composition inside a carbon container, curing and heat treatment were conducted in the same manner as that described above, yielding a green solid. When this solid was analyzed by ICP emission analysis, the results shown in Table 1 were obtained for the various element content values. A result of "<0.1" indicates that the result was less than the detection limit of 0.1 ppm.

**[Table 1]**

| Analyzed element | Measured value (ppm) |
|---|---|
| Fe | <0.1 |
| Cr | <0.1 |
| Ni | <0.1 |
| Al | <0.1 |
| Ti | 0.1 |
| Cu | <0.1 |
| Na | 0.1 |
| Zn | <0.1 |
| Ca | 0.1 |
| Zr | <0.1 |
| Mg | <0.1 |
| B | <0.1 |

These results revealed that nickel, chromium, iron and aluminum, which are impurity elements that typically cause problems in the field of semiconductor devices, were all less than the detection limit.

### [Comparative Example 1]

A silicon sheet of thickness 0.2 mm was sandwiched between two silicon carbide members (20 square, thickness: 2 mm) identical to those used in the example, and with the structure held tightly together within a vacuum atmosphere, the temperature was raised to 1,550°C over a 15-hour period at a rate of temperature increase of 100°C/hour, and then held at 1,550°C for two hours. Subsequently, the temperature was cooled to room temperature at a rate of 200°C/hour, yielding a silicon carbide conjugate.

### - Heat Resistance Test

With the exception of heating the obtained silicon carbide conjugate from room temperature to 1,900°C over a 19-hour period and then maintaining the temperature of 1,900°C for two hours, a heat resistance test was performed in the same manner as the example 1. When the conjugate was cooled, the two silicon carbide members detached at the joining layer, and the integrity of the structure could not be maintained.

### Industrial Applicability

The silicon carbide conjugate of the present invention is useful, for example, in the field of semiconductor device production, as a material for boards and process tubes and the like that are used within steps for conducting heat treatments of semiconductor wafers, or conducting thermal diffusion of trace elements within semiconductor wafers.

## Claims

1. A silicon carbide conjugate, comprising a first silicon carbide member, a second silicon carbide member, and a silicon carbide joining layer interposed between the first silicon carbide member and the second silicon carbide member.

2. The silicon carbide conjugate according to claim 1, wherein a total amount of an impurity element within the silicon carbide that forms the silicon carbide joining layer is not more than 1 ppm.

3. The silicon carbide conjugate according to claim 2, wherein the impurity element is Fe, Cr, Ni, Al, Ti, Cu, Na, Zn, Ca, Zr, Mg or B, or a combination of two or more thereof.

4. The silicon carbide conjugate according to claim 1, wherein the silicon carbide conjugate is obtained by:
interposing a layer of a curable silicone composition between the first silicon carbide member and the second silicon carbide member,
curing the layer of the curable silicone composition, and
thermally decomposing a thus obtained cured product in a non-oxidizing atmosphere, thereby converting the cured product to silicon carbide and forming a silicon carbide joining layer that joins the first silicon carbide member and the second silicon carbide member.

5. The silicon carbide conjugate according to claim 4, wherein the curable silicone composition is an organic peroxide-curable silicone composition, a radiation-curable silicone composition, an addition-curable silicone composition, or a condensation-curable silicone composition.

6. The silicon carbide conjugate according to claim 4, wherein the curable silicone composition is an organic peroxide-curable silicone composition or a radiation-curable silicone composition, and an amount of impurity elements within the silicon carbide that forms the silicon carbide joining layer is not more than 1 ppm.

7. The silicon carbide conjugate according to claim 4, wherein a temperature during thermal decomposition is within a range exceeding 1,500°C but not higher than 2,200°C.

8. A method of producing the silicon carbide conjugate defined in claim 1, the method comprising:
interposing a layer of a curable silicone composition between the first silicon carbide member and the second silicon carbide member,
curing the layer of the curable silicone composition, and
thermally decomposing a thus obtained cured product in a non-oxidizing atmosphere, thereby converting the cured product to silicon carbide and forming a silicon carbide joining layer that joins the first silicon carbide member and the second silicon carbide member.

9. The method of producing the silicon carbide conjugate according to claim 8, wherein the curable silicone composition is an organic peroxide-curable silicone composition, a radiation-curable silicone composition, an addition-curable silicone composition, or a condensation-curable silicone composition.

10. The method of producing the silicon carbide conjugate according to claim 8, wherein the curable silicone composition is an organic peroxide-curable silicone composition or a radiation-curable silicone composition.

11. The method of producing the silicon carbide conjugate according to claim 8, wherein a temperature during thermal decomposition is within a range exceeding 1,500°C but not higher than 2,200°C.

12. The method according to claim 8, wherein the curable silicone composition is an organic peroxide-curable silicone composition comprising:
(a) an organopolysiloxane containing at least two alkenyl groups bonded to silicon atoms,
(b) an organic peroxide, and
(c) as an optional component, an organohydrogenpolysiloxane containing at least two hydrogen atoms bonded to silicon atoms, in an amount that provides 0.1 to 2 mols of hydrogen atoms bonded to silicon atoms within the component (c) per 1 mol of alkenyl groups within the entire curable silicone composition.

13. The method according to claim 8, wherein the curable silicone composition is an ultraviolet light-curable silicone composition comprising:
(d) an ultraviolet light-reactive organopolysiloxane, and
(e) a photopolymerization initiator.

14. The method according to claim 13, wherein the ultraviolet light-reactive organopolysiloxane of the component (d) is an organopolysiloxane having at least two ultraviolet light-reactive groups, represented by a general formula (3a) shown below: 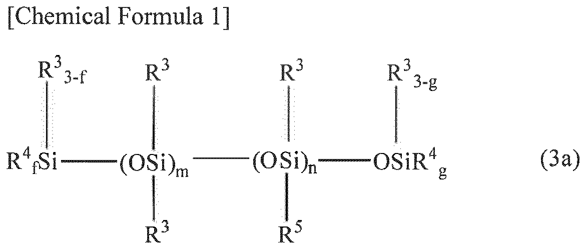 wherein R³ represents identical or different, unsubstituted or substituted monovalent hydrocarbon groups that do not have an ultraviolet light-reactive group, R⁴ represents identical or different groups having an ultraviolet light-reactive group, R⁵ represents identical or different groups having an ultraviolet light-reactive group, m represents an integer of 5 to 1,000, n represents an integer of 0 to 100, f represents an integer of 0 to 3, and g represents an integer of 0 to 3, provided that f+g+n≥2.

15. The method according to claim 14, wherein each of the ultraviolet light-reactive groups is an alkenyl group, alkenyloxy group, acryloyl group, methacryloyl group, mercapto group, epoxy group or hydrosilyl group.

16. The method according to claim 13, wherein the ultraviolet light-reactive organopolysiloxane of the component (d) is an organopolysiloxane having at least two ultraviolet light-reactive groups, represented by a general formula (3b) shown below: 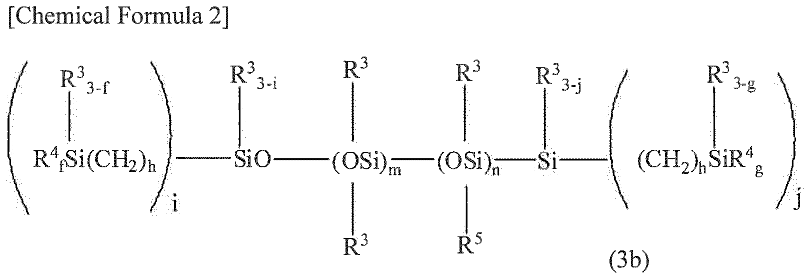 wherein R³ represents identical or different, unsubstituted or substituted monovalent hydrocarbon groups that do not have an ultraviolet light-reactive group, R⁴ represents identical or different groups having an ultraviolet light-reactive group, R⁵ represents identical or different groups having an ultraviolet light-reactive group, m represents an integer of 5 to 1,000, n represents an integer of 0 to 100, f represents an integer of 0 to 3, g represents an integer of 0 to 3, h represents an integer of 2 to 4, and i and j each represents an integer of 1 to 3, provided that fi+gj+n>2.

17. The method according to claim 16, wherein each of the ultraviolet light-reactive groups is an alkenyl group, alkenyloxy group, acryloyl group, methacryloyl group, mercapto group, epoxy group or hydrosilyl group.

18. The method according to claim 13, wherein the component (e) is included in an amount of 0.01 to 10 parts by mass per 100 parts by mass of the component (d).

19. The method according to claim 8, wherein the curable silicone composition is an addition-curable silicone composition comprising:
(f) an organopolysiloxane containing at least two alkenyl groups bonded to silicon atoms,
(g) an organohydrogenpolysiloxane containing at least two hydrogen atoms bonded to silicon atoms, in an amount that provides 0.1 to 5 mols of hydrogen atoms bonded to silicon atoms within the component (g) per 1 sol of alkenyl groups within the entire curable silicone composition, and
(h) an effective amount of a platinum group metal-based catalyst.

20. The method according to claim 8, wherein the curable silicone composition is a condensation-curable silicone composition comprising:
(i) an organopolysiloxane containing at least two silanol groups or silicon atom-bonded hydrolyzable groups,
(j) a hydrolyzable silane, a partial hydrolysis-condensation product thereof, or a combination thereof as an optional component, and
(k) a condensation reaction catalyst as another optional component.
